# EUROPEAN PATENT APPLICATION

(11) **EP 0 898 397 A2**
(43) Date of publication of application: **24.02.1999**
(21) Application number: 98306599.6
(22) Date of filing: 18.08.1998
(51) Int. Cl.: H04L 9/32

(54) **Method for sending a secure communication in a telecommunications system**

(30) Priority: 22.08.1997 US 920274
(71) Applicant: NOKIA MOBILE PHONES LTD., 02150 Espoo (FI)
(72) Inventor: Luo, Tie, Arlington, TX 76006 (US); Herlin, Harry, Grapevine, TX 76051 (US)
(74) Representative: Hibbert, Juliet Jane Grace

(57) **Abstract**

A method for sending a secure comunication in a telecommunications system using public encryption keys. A secure communication may be sent from a first transceiver to a second transceiver through the system. The method allows authentication of each transceiver by the other, provides an integrity check on the communication, and disallows repudiation of the communication by the sending party. Authentication of the communication may be proven at each of the first and second transceivers, through the use of a authentication certificate for each of the first and second transceivers that is generated and stored at a security center in the system, such as a short message service center. As the communication is sent through the system, each user of a transceiver may authenticate the other transceiver by authenticating the certificate of the other transceiver, upon receiving the certificate from the system. Integrity and nonrepudiation for the communication is achieved by utilizing the public encryption and private decryption keys of the security center at the first and second transceivers.

## Description

This invention relates to encryption techniques for telecommunications systems and, more particularly, to a method for sending a secure communication in a telecommunications system using public encryption/decryption key algorithms.

Advances in telecommunications systems technology have resulted in a variety of telecommunications systems and services being available for use. These systems include cellular telephone networks, personal communications systems, various paging systems, and various wireline and wireless data networks. Cellular telephone networks currently in use in the United States include the AMPS analog system, the digital IS-136 time division multiplexed (TDMA) system, and the digital IS-95 digital code division multiplexed (CDMA) system. In Europe the Global Services for Mobile (GSM) digital system is most widely used. These cellular systems operate in the 800-900 MHz range. Personal communications systems (PCS) are also currently being deployed in the United States. Many PCS systems are being developed for the 1800-1900 MHz range, some based on one or another of the major cellular standards.

The newer digital systems such as GSM, IS-136, and IS-95 have been developed so as to include encryption services for communication privacy. The digital nature of the speech or data signals carrying the communications between two users in these digital systems allows the signals to be processed through an encryption device to produce a communications signal that appears to be random or pseudorandom in nature, until it is decrypted at an authorized receiver. When it is desired to send a secure message in such a system, the encryption feature of the system can be used to encrypt the message. As an example, the short message service (SMS) feature specified in these standards could be used to send a text message that is encrypted over the air interface according to the system encryption algorithm. Voice communications could also be encrypted using the system encryption algorithm.

In the GSM, IS-136, and IS-95 systems, the encryption is performed on message transmissions between each user and the system by using a secret key value, "session key", where the key is known only to the system and the user communicating with the system. The system standards under consideration for PCS networks may also include encryption services that are based on the encryption techniques specified in the digital standard from which a particular PCS standard is derived, i.e., GSM, IS-136, or IS-95.

In GSM the system operator controls the security process by issuing a subscriber identity module (SIM) to each system user. The SIM is a plug-in chip or card that must be inserted into a mobile station that a user intends to make or receive calls through. The SIM contains a 128-bit number called the Ki that is unique for each user. The Ki is used for both authenticating and deriving an encryption key. In GSM a challenge and response procedure is used to authenticate each user and generate encryption bits from Ki for the user. The challenge and response procedure may be executed at the discretion of the home system.

When a GSM mobile is operating in its home system after the user has identified himself by sending in his international mobile system identity/temporary mobile system identities (IMSI/TMSI), a 128-bit random number (RAND) is generated in the system and combined with the mobile user's Ki to generate a 32-bit response (SRES). The system then transmits RAND to the mobile which, in turn, computes its own SRES value from the mobile user's Ki and transmits this SRES back to the system. If the two SRES values match, the mobile is determined to be authentic. Encryption bits for communications between the mobile and system are generated in both the mobile and network by algorithms using RAND and Ki to produce an encryption key "Kc". Kc is then used at both ends to encrypt and decrypt communications and provide secure communications. When a GSM mobile is roaming, the RAND, SRES and Kc values are transferred to a visited system upon registration of the user in the visited system or upon a special request from a visited system. The Ki value is never available other than in the home system and the user's SIM.

The IS-136 and IS-95 authentication and encryption procedures are identical to each other and similar to the GSM authentication and encryption procedures. In IS-136 and IS-95 systems a challenge response method is also utilized. The IS-136 and IS-95 method utilizes a security key called the "A-key". The 64-bit A-key for each mobile is determined by the system operators. The A-key for each mobile is stored in the home system of the mobile's owner and in the mobile itself. The A-key may be initially communicated to the mobile owner in a secure manner, such as the United States mail. The owner can then enter the A-key into the mobile via the keypad. Alternately, the A-key may be programmed into the mobile station at the factory or place of service. The A-key is used to generate shared secret data (SSD) in both the mobile and the home system from a predetermined algorithm. SSD for each mobile may be periodically derived and updated from the A-key of that particular mobile by use of an over the air protocol that can only be initiated by the home system operator.

In IS-136 and IS-95 authentication and encryption, a 32-bit global challenge is generated and broadcast at predetermined intervals within systems in the service area of the mobile. When a mobile attempts system registration/call setup access in the home system, the current global challenge response is used to compute, in the mobile, an 18-bit authentication response from the mobile's SSD. An access request message, including the authentication response and a call count value for the mobile, is then sent to the home system from the mobile. Upon receiving the access request the home system will compute its own response value using the global challenge and the mobile's SSD. If the mobile is verified as authentic by comparison of the authentication responses, the mobile's SSD and other relevant data, including the call count value, the mobile is registered.

When a mobile attempts system registration/call setup access in a visited system, the current global challenge response is used to compute, in the mobile, the 18-bit authentication response from the mobile's SSD. An access request message is then sent to the visited system from the mobile. For initial registration accesses in a visited system, the access request message includes the authentication response computed in the mobile. The authentication response and global challenge are then sent to the home system of the mobile, where the home system will compute its own response value using the global challenge and the mobile's SSD. If the mobile is verified as authentic by comparing the authentication responses, the mobile's SSD and other relevant data, including the call count value, are then sent to the visited system and the mobile is registered. When a call involving the mobile is set up, a current authentication response value and call count are sent to the system from the mobile along with the call setup information. Upon receiving the call setup information, the visited system retrieves the stored SSD and call count values for the requesting mobile. The visited system then computes an authentication response value to verify that the received SSD value and the current global challenge produce the same response as that produced in the mobile. If the authentication responses and call counts match, the mobile is allowed call access. If communications security is desired, an encryption key is produced in both the mobile and system by using the global challenge and the mobile's SSD as input to generate encryption key bits.

Further background for such techniques as those used in GSM and the IS-136 and IS-95 systems may be found in the article "Techniques for Privacy and Authentication in Personal Communications Systems" by Dan Brown in IEEE Personal Communications dated August 1995, at pages 6-10.

While the above-described private key procedures used in the GSM and the IS-136 and IS-95 systems provide communications security, none of these procedures is entirely immune to interception and eavesdropping. All the procedures require that a user's A-key or Ki value be known both in the mobile station and home system. They also require that the user's SSD or Kc value be known at both ends of the communications link, i.e., in the system and in the mobile. Each of these values could potentially be corrupted and become known to a potential interceptor. An individual knowing the Ki or A-key of a user or an individual who intercepts the Kc or SSD of the user in intersystem communications could potentially intercept and eavesdrop on communications that were intended to be secure and private. Additionally, since each user's keys are available at a base station with which they are communicating, encrypted communications involving two mobile stations connected through a base station of a system could be breached at the base station.

Public key encryption methods are methods in which a user is assigned an encryption key that is public, i.e., may be known and revealed publicly, but is also assigned a private decryption key that is known only to the user. Only an intended receiving user's decryption key can decrypt an encrypted message meant for the intended receiving user, i.e., decrypt a message encrypted using the intended receiving user's encryption key. In order to send a secure message to an intended receiver a user would encrypt the message using the intended receiver's encryption key before sending the message. When the intended receiver received the encrypted message, the intended receiver would decrypt the message using the intended receiver's decryption key. In a public key encryption telecommunication system, the user would be allowed to keep the decryption key to himself, away from base stations or the system. Since the key necessary for decrypting a message is known only to the receiving user, public key encryption methods could provide more secure communications than are obtainable with the current encryption techniques being used in, for example, GSM, IS-136, or IS-95.

Public key encryption methods provide the added advantage in that a message can be encoded and subsequently decoded by first applying the encryption key of a receiving user to a message to encode before transmission and then applying the decryption keys of the receiving user after reception to decode, or by first applying the decryption key of a sending user to a message to encode before transmission and then applying the encryption key of the sending user in the receiver after reception to decode. A first user can sign a message by applying the first user's decryption key to a message and sending both the signed message and a copy of the message. Upon receiving the message, a second user can verify that the message came from the first user by applying the first user's encryption key to the received signed message and checking to see if the result is the same as the received copy of the message. Since only the first user knows the first user's decryption key, the copy of the message and the signed message (after application of the encryption key) received by the second user will be identical only if sent by the first user. Also, Digital Signature Standard (DSS) or Elliptic Curve Digital Signature Algorithms (ECDSA), which are based on public key algorithms, can be used to digitally sign a message even though they cannot be used for encryption. In these cases, a public encryption key provides verification of a signature on a message input, and a private decryption key is used to sign the message.

With wireless communications becoming such an important factor in everyday life, the use of this technology to perform electronic commerce, such as telebanking, electronic payment and investments, has been proposed. Wireless services using end-to-end and store-and-forward features may be used to provide such electronic commerce. Short message services (SMS), General Pocket Radio Services (GPRS), cellular digital pocket data network (CDPD), and narrow band socket (NBS) are examples of these wireless services.

In any electronic commerce it would be desirable for certain security features to be provided. The identity of a message sender must be verifiable and the integrity of the message must also be verifiable, i.e., it must not be possible for anyone other than the sender to alter the message. The sender should not be able to repudiate the message. The privacy of the message should also be maintained. Additionally, it would be desirable to receive confirmation of any transaction connected to the message from the receiving party.

Methods have been proposed for end-to-end encryption based on symmetric algorithms in services such as SMS; however, these symmetric algorithms offer authentication and privacy but not nonrepudiation. Also, integrity can be undermined at the receiver since the integrity in a symmetric algorithm is provided by an encryption function using the message as input and the same encryption function is used to decrypt the message. Since the message and encryption key are both known to the receiver of the message, the receiver could alter the message contents. For example, a bank could create a false transaction request using the encryption function and claim a customer requested a particular transaction.

Against this background the present invention aims to provide a method for sending a secure communication in a telecommunication system, and a secure process for end-to-end and store-and-forward messages sent from a first service user to a second service user. Accordingly, in one aspect there is provided a method for sending a secure message in a telecommunications system having a plurality of transceivers, said method comprising the steps of: assigning a first decryption key and a first encryption key to a first transceiver, and assigning a second decryption key and a second encryption key to a second transceiver; assigning a third decryption key and a third encryption key to a message center; forming a first and a second certificate within said message center, said first certificate including said first encryption key and a first authentication value, and said second certificate including said second encryption key and a second authentication value, wherein said first and second authentication values are calculated using said third decryption key on a first and second authentication parameter, respectively; transmitting a first message from said first transceiver to said message center, said first message including information indicating a request to transmit a communication from said first transceiver to said second transceiver; transmitting a second message from said message center to said first transceiver, said second message including said second certificate; authenticating said second certificate at said first transceiver by using said third encryption key on said second authentication value to generate a first result and comparing said first result with said second authentication parameter as known in said first transceiver; selecting a session key at said first transceiver; forming a third message, at said first transceiver, said third message comprising a first message portion comprising said session key encrypted using said second encryption key, a second message portion comprising said communication encrypted using said session key, and an integrity value computed by using said first decryption key on an integrity parameter; transmitting said third message to said message center, said third message including said first and second message portions and said integrity value; transmitting said first certificate and said third message from said message center to said second transceiver; authenticating said first certificate at said second transceiver by using said third encryption key on said first authentication value to generate a second result and comparing said result with said first authentication parameter as known in said second transceiver; calculating said session key from said first message portion using said second decryption key and decrypting said communication from said second message portion using said session key; and checking the integrity of said third message using said first encryption key on said integrity value to generate a third result and comparing said third result with said integrity parameter as known in said second transceiver. The process allows each service user to be verified by the other, provides an integrity check on the message, and disallows repudiation of the communication by the sending user. This provides an advantage over symmetric point-to-point algorithm where the key used to encrypt a communication must be known by both the sending and receiving service users.

In an embodiment of the invention, a first transceiver is assigned first identifying information, a first encryption key and a first decryption key, and, a second transceiver is assigned second identifying information, a second encryption key and a second decryption key. A short message service center (SMSC) is assigned a third encryption key and a third decryption key. The decryption keys are private and known only to the holder. The encryption keys are public and may be distributed throughout the system. An authentication certificate for each of the first and second transceivers is generated within the SMSC, with the authentication certificate including the identifying information and encryption key of the transceiver for which it is generated. Each authentication certificate also includes a authentication value generated using the third decryption key of the SMSC to sign the authentication value. Altematively, the third encryption and third decryption keys could be assigned to a third party, and the third party could assign the authentication certificates. This third party could be a bank or some other secure party. The secure communication could then pass through this third party, or the SMSC could access the information from the third party.

The authentication values in the authentication certificates generated by applying the third decryption key may be generated by inputting the first identifying information and first encryption key into a authentication function and then applying the third decryption key to the function output to generate the authentication value of the first transceiver and, inputting the second identifying information and second encryption key into the authentication function and applying the third decryption key to the function output to generate the authentication value for the second transceiver. The third decryption key is used for signing the authentication value, and the third encryption key is used to verify the signed authentication value in this embodiment. The input used to generate the authentication value of each certificate may then be made known to a receiver, for authentication of the certificate, by the inclusion of the unencrypted identifying information and encryption keys in the appropriate authentication certificate when the authentication certificate is sent to the receiver.

In the message process , the user of the first transceiver sends a message to the SMSC indicating that the user wishes to send a secure communication to the user of the second transceiver by SMS. The SMSC sends the authentication certificate of the second transceiver back to the first transceiver in response. This authentication certificate includes the second identifying information, the second encryption key and the authentication value of the second transceiver. The authenticity of the certificate is verified at the first transceiver by applying third encryption key to the received authentication value and comparing this result to the output of the function having the received second identifying information and second encryption key as inputs. The authentication function used to generate the certificates and third encryption key are assumed to be known in the first transceiver.

If the authenticity of the authentication certificate for the second transceiver is verified, a session key is generated in the first transceiver. The session key is then encrypted using the second encryption key that was received in the certificate of the second transceiver. The communication to be sent is also encrypted using the unencrypted session key. Also, the first decryption key is used to generate a integrity value. In the embodiment the integrity value may be generated by applying first decryption key to the output of a integrity function that has been generated using at least one input that is known only the first and second transceivers. This integrity function may be the same as the authentication function used in forming the authentication certificates. The integrity value may be generated by inputting the unencrypted communication and unencrypted session key into the integrity function and then applying the first decryption key. The encrypted session key, encrypted communication and integrity value are then sent by SMS to the SMSC.

When the second transceiver is available to receive the SMS message, the authentication certificate of the first transceiver, the encrypted session key, encrypted communication and integrity value are sent from the SMSC to the second transceiver by SMS. This authentication certificate includes the first identifying information, the first encryption key and the authentication value of the first transceiver. The authenticity of the certificate is verified at the second transceiver by applying the third encryption key tc he received authentication value and comparing this result to the output of the authentication function having the received first identifying information and first encryption key as input. The authentication function used to generate the certificates and third encryption key are to be known in the second transceiver.

If the authenticity of the authentication certificate for the first transceiver is verified, the session key is recovered in the second transceiver by applying the second decryption key. The communication is then decrypted using the recovered session key. A final check on the integrity of the message is also performed by applying the first encryption key to the integrity value received in the integrity certificate and comparing this result to a value calculated by inputting the communication and session key into the integrity function.

A more complete understanding of the method and apparatus may be had by reference to the following detailed description when read in conjunction with the accompanying drawings wherein:
- FIG. 1: illustrates a block diagram of a telecommunications system that provides secure message service according to an embodiment of the invention; and
- FIG. 2: is a flow diagram showing process steps performed to provide a secure message service within the telecommunications system of FIG. 1.

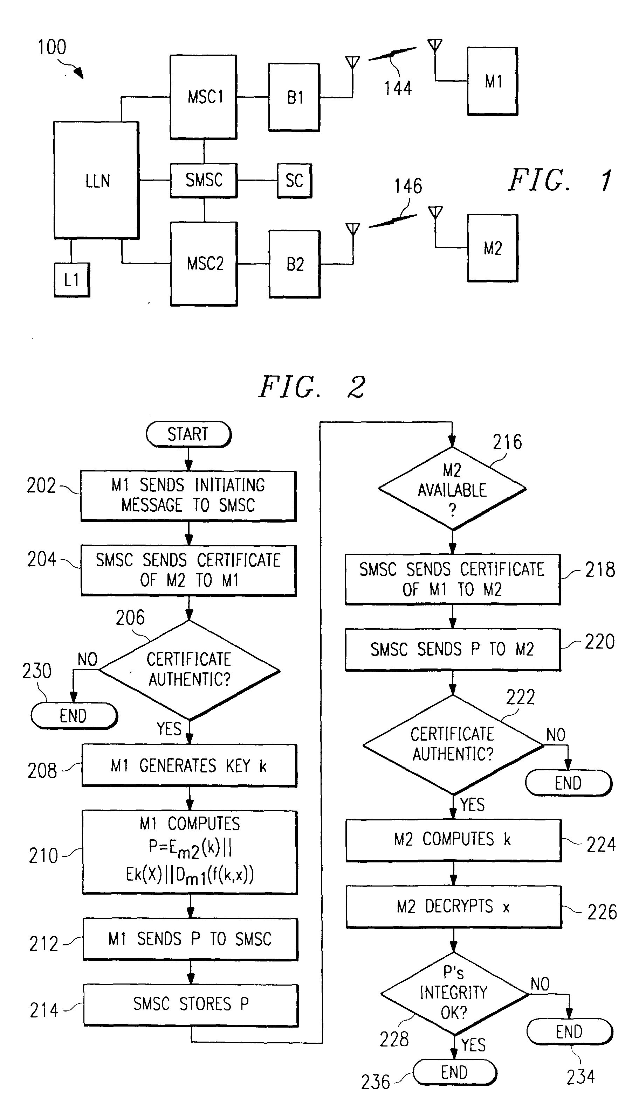

FIG. 1 illustrates a block diagram of a telecommunications system 100 constructed according to an embodiment of the invention. System 100 comprises base stations B1 and B2, short message service center (SMSC), security center (SC), mobile stations M1 and M2, mobile switching centers (MSC1 and MSC2), landline network (LLN) and landline telephone (L1). Although shown to include two base stations and two mobile stations, system 100 may comprise more or less base stations or mobile stations than are shown in FIG. 1. The mobile stations M1 and M2 may be mobile telephones that provide speech communications between a user of M1 or M2 and another mobile telephone, or between the user and land line telephone L1 connected to landline network LLN. Mobile stations M1 and M2 may also be any other type of mobile communications device capable of operating according to the system standard for system 100, such as a personal communications device or a laptop computer operating through a wireless modem. Landline network LLN may be a public switched telephone network (PSTN) or a private landline network. Mobile switching centers MSC1 and MSC2 control call routing, registration and hand-off a mobile from one base station to another in system 100. In system 100, mobile stations M1 and M2 may move about the coverage area base stations B1 and B2 while communicating with system 100 through RF links. In FIG. 1, mobile stations M1 and M2 are shown to be communicating with base stations B1 and B2, respectively, over RF links 144 and 146, respectively. Communications may be according to any telecommunications system standard that provides a digital interface over the RF links between mobile stations M1 and M2 and base stations B1 and B2. The design and operation of digital telecommunications systems and the use of short message services (SMS) is known and will not be described in detail here. System 100 may be implemented in any number of ways, for example, the digital RF interface in system 100 may operate according to a standard similar to the Telecommunications Industry Association/Electronic Industry Association (TIA/EIA) IS-136, IS-95, and PCS 1900 standards or the European GSM standard.

Referring now to FIG. 2, therein is a flow diagram showing process steps performed to provide a secure message service within the telecommunications system of FIG. 1. In this embodiment a user of M1, for example, is able to send a secure short message service (SMS) message to the user of M2 or L1.

A designated party, which may be, for example, a bank or the system operator, issues authentication certificates to SMS users. The certificate issuer uses a public key Algorithm AO having a public encryption key EO and a private decryption key DO. A function f(t,p) is also defined so that it is computationally impossible to have any two different pairs of the variables t and p giving the same result for f(t,p), i.e., if different pairs of values for t and p are randomly chosen, the chances of f(t,p) generating the same result is near zero. For example, the function f(t,p) may be a hushing function H(t□p) that is commonly used to shorten transmitted messages, where the value (t□p) is the concatenation between t and p, i.e., t□p is a binary number formed from both t and p. EO and AO are known at all sending and receiving parties using the secure SMS.

A user X will choose a public algorithm with a public encryption key Ex and a private decryption key Dx. User X is also assigned a distinguishable identity x. The certificate of user X is defined to be the triplet (x, Ex, Cx) where Cx = Dₒ(f(x,Ex)). Cx is the authentication value used to authenticate the certificate. f(x,Ex) may be the function described above for f(t,p). The certificates for each user may be stored in the network. In the embodiment of FIG. 1, the certificates are stored within security center SC, which has a secure connection to the SMSC.

Due to the limitation of the message length in SMS, in the described embodiment the Elliptic Curve Cryptosystem (ECC) may be used for the signing and verification of the authentication certificates using EO and DO. In ECC an elliptic curve E over a finite field F₂^{m} (m = 160) is chosen. A point p on the curve is fixed. The user x's public key is then bp, and the user's private key is b, where b is some integer and the user's certificate Cₓ = Dof(x,bp). If ECDSA is used by the trusted party Cₓ is about 320 bits long. The encryption of m may be done by selecting a random integer k and computing kp and k(bp) from a sum operation on the elliptic curve. Methods of using the sum operation on the elliptic curve are known. See N. Koblitz, A *Course in Number Theory and Cryptography,* Springer-Verlag (1994). Kp is then concatenated with the exclusive-or of m and k(bp) to encrypt m. To decrypt the operation b(kp)⊕(m⊕k(bp)) is performed at the receiver.

Alternatively, if a message service provides a larger bandwidth capability, the key functions Ex and Dx may be chosen according to the Rabin criteria. In the Rabin algorithm for this example, two prime numbers p and q are chosen using a selected predefined number N, where p x q = N, and p=4k₁ + 3, and q= 4 k₂ + 3, and where k₁and k₂ are constants. N may be publicly known, while p and q must be kept private. Ex is defined as Ex(c) = (c)²mod Nx, and Dx is defined as Dx(c) = c^{1/2} mod Nx, where c is the encrypted value. To solve Dx(c) for c^{1/2}, the equations x² = c mod p, and, x²= c mod q, are solved using the solutions, x₁ = ± c^{(p+1)/4},and, x₂ = ± c^{(q+1)/4}. If two values a and b are found such that ap + bq = 1, then c^{1/2} can be found by the equation c^{1/2} = bq x₁+ apx₂ mod Nx. The certificate Cx = D0(f(x,Nx)) = (f(x,Nx))^{1/2} mod N0 if Rabin is used by the SMSC. A background description of the Rabin algorithm is given in the book *Cryptography, Theory and Practice* by Stinson, published by CRC, 1995, at pages 143-148.

As another alternative, the key functions Ex and Dx may be chosen according to the Rivest, Shamir and Adleman (RSA) criteria. In RSA two (large) prime numbers p and q are first selected, where p x q = N. Two other values, a2 and b2, are then chosen, where (a2)( b2) = 1 mod (p-1)(q-1). N and a2 may be public, and b2 must be kept private. Ex and Dx are then defined as Ex(c) = (c)^{a2} mod N, and Dx = (c)^{b2} mod N, the certificate Cₓ = DO(f(x,a2,N)). A detailed description of the RSA algorithm is given in the book *Digital Money* by Lynch, et al., published by John Wiley and Sons, 1996, at pages 76-86.

Referring again to FIG. 2, and using an example of M1 sending a secure SMS message to M2, the process starts at step 202 when M1 sends an initiating message to the SMSC. The initiating message may be an SMS message addressed to the SMSC and include information indicating that M1 is to send a secure SMS to M2.

The SMSC responds by retrieving the certificate of M2 (M2, Eₘ₂, Dₒ (f (m₂, Eₘ₂))) from the security center SC and sending the certificate of M2 to M1 in an SMS message. Next, at step 206, the certificate of M2 is authenticated in M1. The authentication is performed by determining if Eₒ (Dₒ (f (m₂, Eₘ₂))) = f (m₂, Eₘ₂). If Eₒ (Dₒ (f (m₂,, Eₘ₂))) = f (m₂, Eₘ₂), the process moves to step 208. If, however, Eₒ (Dₒ (f (m₂, Eₘ₂))) is not equal to f (m2, Eₘ₂), the process moves to step 230 and ends.

At step 208 a session key k is generated in M1. This session key k is for a symmetric algorithm known at M1 and M2, so that a message can be encrypted and decrypted at M1 and M2 using k. Next, at step 210 the second public encryption key is used to encrypt k, k itself is used to encrypt x to generate Ek(x), where Ek indicates encryption using k, and the first decryption key is applied to the output of an integrity function f(k,x), having k and x as inputs to generate Dₘ₁(f(k,x). The value Dₘ₁(f(k,x) is the integrity value used to check the of integrity x. These three values are used to form a message P. The message P may be formed by concatenating Eₘ₂(k), Ek(x) and Dm1(f(k,y)) into one field, i.e., P = Eₘ₂(k) □ Ek(x) □ Dₘ₁(f(k,x)). At step 212, M1 sends P to the SMSC in an SMS message. At 214 P is stored in the SMSC. When M2 is available, the SMSC will send the SMS message to M2. This may be done upon registration of M2 in system 100, or if M2 is already registered, the SMSC may page M2. The process will continue at step 216 until M2 is available. When M2 is available, the process moves to step 218. At step 218, the SMSC sends the certificate of M1 (m₁, Eₘ₁, Dₒ(f(m₁, Eₘ₁))) to M2 and at step 220 the SMSC sends P to M2. After the certificate of M1 is received, the certificate is authenticated in M2 in step 222. The authentication is performed by determining if Eₒ(Dₒ(f (m₁ Eₘ₁))) = f(m₁, Eₘ₁). If Eₒ(Dₒ(f(m₁ Eₘ₁))) = f(m₁, Eₘ₁), the process moves to step 224. If, however, Eₒ(Dₒ(f(m₁ Eₘ₁))) is not equal to f(m₁, Eₘ₁), the process moves to step 232 and ends.

At step 224 the session key k is computed in M2. k is computed from k = Dₘ(Eₘ₂(k)). Next, at step 226 the message x is decrypted in M2. X is decrypted from x = Dk (Ek(x)), where Dk indicates decryption using k. The integrity of P is then checked at step 228. The integrity is checked by determining if Eₘ₁(Dₘ₁(f(k,x))) = f(k,x). If Eₘ₁(Dₘ(f(k,x))) = f(k,x) the process moves to step 236. At step 236 the valid message x is read in M2. If, however, Eₘ₁(Dₘ(f(k,x))) is not equal to f(k,x), the process moves to step 234 and ends.

In the process of FIG. 2, both M1 and M2 are authenticated through their certificates. Message integrity and nonrepudiation are verified by using Dₘ₁(f(k,x)). M1 cannot deny sending the message since Dₘ₁ is known only to M1. No one can change the contents of x since Dₘ₁(f(k,x)) would take on a different value. The privacy of the message x is provided by Ek(x).

Although described in the context of particular embodiments, it should be realized that a number of modifications to these teachings may occur to one skilled in the art. By example, in the authentication of the authentication certificates, the authentication value may be calculated by using values other than the encryption key and identity information included in and sent with the certificate. If other values are known to both the SMSC and the authenticating transceiver these values could be used to authenticate that the authentication value was encrypted using the decryption key of the SMSC. Also, by example, the method may be used in other services having store and forward capability. The message center in this case could, for example, be replaced by a bank-owned store and forward device. Thus, while the invention has been particularly shown and described with respect to preferred embodiments thereof, it will be understood by those skilled in the art that changes in form and scope may be made therein without departing from the scope and spirit of invention.

## Claims

1. A method for sending a secure message in a telecommunications system having a plurality of transceivers, said method comprising the steps of:
assigning a first decryption key and a first encryption key to a first transceiver, and assigning a second decryption key and a second encryption key to a second transceiver;
assigning a third decryption key and a third encryption key to a message center;
forming a first and a second certificate within said message center, said first certificate including said first encryption key and a first authentication value, and said second certificate including said second encryption key and a second authentication value, wherein said first and second authentication values are calculated using said third decryption key on a first and second authentication parameter, respectively;
transmitting a first message from said first transceiver to said message center, said first message including information indicating a request to transmit a communication from said first transceiver to said second transceiver;
transmitting a second message from said message center to said first transceiver, said second message including said second certificate;
authenticating said second certificate at said first transceiver by using said third encryption key on said second authentication value to generate a first result and comparing said first result with said second authentication parameter as known in said first transceiver;
selecting a session key at said first transceiver;
forming a third message, at said first transceiver, said third message comprising a first message portion comprising said session key encrypted using said second encryption key, a second message portion comprising said communication encrypted using said session key, and an integrity value computed by using said first decryption key on an integrity parameter;
transmitting said third message to said message center, said third message including said first and second message portions and said integrity value;
transmitting said first certificate and said third message from said message center to said second transceiver;
authenticating said first certificate at said second transceiver by using said third encryption key on said first authentication value to generate a second result and comparing said result with said first authentication parameter as known in said second transceiver;
calculating said session key from said first message portion using said second decryption key and decrypting said communication from said second message portion using said session key; and
checking the integrity of said third message using said first encryption key on said integrity value to generate a third result and comparing said third result with said integrity parameter as known in said second transceiver.

2. The method of claim 1, wherein said step of assigning further comprises assigning first identifying information to said first transceiver and assigning second identifying information to said second transceiver, and wherein said second authentication parameter is formed by applying an authentication function to said second identifying information and said second encryption key.

3. The method of claim 1 or claim 2, wherein said step of authenticating said second certificate at said first transceiver comprises applying said authentication function to said second identifying information and said second encryption key received from said message center in said second certificate to generate said second authentication parameter, applying said third encryption key to said second authentication value to generate said first result, and comparing said first result and said second authentication parameter.

4. The method of claim 3, wherein said first authentication value is formed by applying said authentication function to said first identifying information and said first encryption key.

5. The method of any of claims 1 to 4, wherein said step of authenticating said first certificate at said second transceiver comprises applying said authentication function to said first identifying information and said first encryption key received from said message center in said first certificate to generate said first authentication parameter, applying said third encryption key to said first authentication value to generate said second result, and comparing said second result and said first authentication parameter.

6. The method of claim 5, wherein said third encryption key and said third decryption key are chosen and applied according to an ECC-type algorithm.

7. The method of claim 5, wherein said first, second and third encryption keys and said first, second and third decryption keys are chosen and applied according to an RSA-type algorithm.

8. The method of claim 5 wherein said first, second and third encryption keys and said first, second and third decryption keys are chosen and applied according to a Rabin-type algorithm.

9. The method of claim 3, wherein said third encryption key and said third decryption key are chosen and applied according to an ECC-type algorithm.

10. The method of claim 3, wherein said first, second and third encryption key and said first, second and third decryption keys are chosen and applied according to an RSA-type algorithm.

11. The method of claim 3, wherein said first, second and third encryption keys and said first, second and third decryption keys are chosen and applied according to a Rabin-type algorithm.

12. The method of claim 3, wherein said integrity parameter used to compute said integrity value in said step of forming a third message comprises the output of an integrity function having said session key and said communication as input, and wherein said step of checking the integrity of said third message comprises inputting said session key and said communication as input to said integrity function to generate said integrity parameter as known in said second transceiver.
